# EUROPÄISCHE PATENTSCHRIFT

(11) **EP 4 283 925 B1**
(45) Veröffentlichungstag und Bekanntmachung des Hinweises auf die Patenterteilung: **21.08.2024**
(21) Anmeldenummer: 22175490.6
(22) Anmeldetag: 25.05.2022
(51) Int. Cl.: H04L 9/40, H04L 12/46

(54) **VERFAHREN ZUR GESICHERTEN ÜBERMITTLUNG ZEITKRITISCHER DATEN INNERHALB EINES KOMMUNIKATIONSSYSTEMS UND KOMMUNIKATIONSSYSTEM**
METHOD FOR SECURE TRANSMISSION OF TIME-CRITICAL DATA WITHIN A COMMUNICATION SYSTEM AND COMMUNICATION SYSTEM
PROCÉDÉ DE TRANSMISSION SÉCURISÉE DES DONNÉES À TEMPS CRITIQUE DANS UN SYSTÈME DE COMMUNICATION ET SYSTÈME DE COMMUNICATION

(43) Veröffentlichungstag der Anmeldung: 29.11.2023
(73) Patentinhaber: Siemens Aktiengesellschaft, 80333 München (DE)
(72) Erfinder: Gedicke, Nils, 76751 Jockgrim (DE); Gsänger, Volker, 91126 Kammerstein (DE); Laurig, Frank, 92369 Sengenthal (DE); Schwering, Wolfgang, 91341 Röttenbach (DE); Schönemann, Peter, 90489 Nürnberg (DE)
(74) Vertreter: Siemens Patent Attorneys

(56) Entgegenhaltungen:
- CN-A- 113 347 168
- CN-A- 114 024 706
- US-A1- 2022 128 985

## Beschreibung

Die vorliegende Erfindung betrifft ein Verfahren zur gesicherten Übermittlung zeitkritischer Daten innerhalb eines Kommunikationssystems, insbesondere innerhalb eines Kommunikationssystems eines industriellen Automatisierungssystems, und ein Kommunikationssystem. Das Kommunikationssystem ist zur Durchführung des erfindungsgemäßen Verfahrens geeignet bzw. vorgesehen.

Industrielle Automatisierungssysteme umfassen üblicherweise eine Vielzahl von über ein industrielles Kommunikationsnetz miteinander vernetzten Automatisierungsgeräten und dienen im Rahmen einer Fertigungs- oder Prozessautomatisierung zur Steuerung, Regelung oder Überwachung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet. Insbesondere können Steuerungsdienste bzw. -anwendungen automatisiert und auslastungsabhängig auf aktuell verfügbare Server oder virtuelle Maschinen eines industriellen Automatisierungssystems verteilt werden.

Aus WO 2019/042915 A1 ist ein Verfahren zur Überprüfung von innerhalb eines industriellen Automatisierungssystems mit mehreren Automatisierungszellen übermittelten Datagrammen bekannt, bei dem zu überprüfende Datagramme aus den Automatisierungszellen über eine jeweilige Firewall-Schnittstelle zur Überprüfung an Firewall-System übermittelt und dort regelbasiert überprüft werden. Das Firewall-System wird durch zumindest eine innerhalb eines mehrere Rechnereinheiten umfassenden Datenverarbeitungssystems bereitgestellte virtuelle Maschine gebildet. Zur Übermittlung der zu überprüfenden Datagramme wird jeweils ein Sicherungsschicht-Tunnel zwischen der jeweiligen Firewall-Schnittstelle und dem Firewall-System aufgebaut. Sowohl zu prüfende Datagramme als auch zumindest erfolgreich überprüfte Datagramme werden innerhalb des jeweiligen Sicherungsschicht-Tunnels übermittelt.

In WO 2020/182627 A1 ist ein Verfahren zur Überwachung der Integrität eines industriellen Cyber-physischen Systems beschrieben, bei dem Messdaten, die mit verschiedenen Sensoren des Cyber-physischen Systems erfasst wurden, bzw. Steuerdaten, die für verschiedene Aktuatoren des Cyber-physischen Systems bestimmt sind, bereitgestellt bzw. abgegriffen werden. Außerdem wird wenigstens ein Messdaten-Zusammenhangsparameter zwischen den mit den verschiedenen Sensoren erfassten Messdaten ermittelt, bzw. es wird wenigstens ein Steuerdaten-Zusammenhangsparameter zwischen den für die verschiedenen Aktuatoren bestimmten Steuerdaten ermittelt. Der wenigstens eine Messdaten-Zusammenhangsparameter wird mit einer Messdaten-Zusammenhangs-Referenz verglichen, bzw. der wenigstens eine Steuerdaten-Zusammenhangsparameter wird mit einer Steuerdaten-Zusammenhangs-Referenz verglichen. Basierend auf dem Vergleich wird die Integrität des zu überwachenden Cyber-physischen Systems beurteilt.

WO 2020/212051 A1 betrifft ein industrielles Automatisierungsgerät, das eine Überwachungseinheit zur Überprüfung und Überwachung des Integritätszustandes des industriellen Automatisierungsgerätes umfasst. Außerdem ist zumindest eine Gerätekomponente vorgesehen, die rückwirkungsfrei über eine Kommunikationsverbindung mit der Überwachungseinheit kommuniziert. Dabei umfasst die rückwirkungsfreie Kommunikation ein Bereitstellen wenigstens eines Gerätekomponentenparameters von der Gerätekomponente an die Überwachungseinheit. Die Überwachungseinheit ist dazu ausgebildet, den bereitgestellten Gerätekomponentenparameter der Gerätekomponente des industriellen Automatisierungsgerätes zur Überprüfung und Überwachung des Integritätszustandes des industriellen Automatisierungsgerätes zu protokollieren und zu verarbeiten. Des Weiteren ist die Überwachungseinheit dazu ausgebildet, den Integritätszustand des industriellen Automatisierungsgerätes als Ergebnis des verarbeiteten Gerätekomponentenparameters der Gerätekomponente des industriellen Automatisierungsgerätes zu protokollieren bzw. bereitzustellen. Darüber hinaus ist die Überwachungseinheit als eine vertrauenswürdige Gerätekomponente durch einen Manipulationsschutz manipulationsgeschützt in dem industriellen Automatisierungsgerät ausgebildet.

Aus der älteren europäischen Patentanmeldung mit dem Anmeldeaktenkennzeichen 21176125.9 ist ein Verfahren zur gesicherten Einräumung eines Zugriffs auf Daten bzw. Ressourcen innerhalb eines Kommunikationssystems bekannt, das in mehrere Sicherheitszonen unterteilt ist, die jeweils eine Mehrzahl von physikalisch bzw. logisch miteinander verbundenen Geräten umfassen. Derselben Sicherheitszone zugeordnete ausgewählte Geräte tauschen untereinander ungeschützte Daten aus und autorisieren einen Zugriff auf Daten bzw. Ressourcen implizit. Eine Gateway-Komponente oder eine der jeweiligen Sicherheitszone zugeordnete Überprüfungsinstanz fordert zur Einräumung eines Zugriffs von externen Geräten außerhalb der Sicherheitszone auf durch zumindest ausgewählte Geräte der Sicherheitszone bereitgestellte Daten bzw. Ressourcen für die externen Geräte bzw. dortige Nutzer Identitätsnachweise sowie Zugriffsberechtigungen an und überprüft diese anhand von Sicherheitsrichtlinien. Bei erfolgreicher Validierung der Identitätsnachweise und Zugriffsberechtigungen werden zwischen zumindest ausgewählten Geräten unterschiedlicher Sicherheitszonen mittels der jeweiligen Gateway-Komponenten jeweils geschützte Verbindungen zur Übermittlung von Daten bzw. zum Zugriff auf Ressourcen aufgebaut.

US Patentanmeldung US2022/128985 ist weiterer Stand der Technik.

Zero Trust-Konzepte sehen vor, dass sich Benutzer bzw. Geräte unabhängig von ihrer jeweiligen Position oder Umgebung sich gegenüber Kommunikationspartner bzw. bei einem Zugriff auf geschützte Ressourcen authentisieren, um nach einer erfolgreichen Authentifizierung beispielsweise auf gewünschte Daten oder Anwendungen zugreifen zu können. In industriellen Automatisierungssystemen ist hinsichtlich einer Anwendung von Zero Trust-Konzepten problematisch, dass nicht jeder Benutzer oder jedes Gerät in der Lage ist, insbesondere unter wirtschaftlichen Aspekten, eine Authentisierung durchführen zu können. Grundsätzlich müssen Vertraulichkeit und Datenintegrität bei einer Datenübermittlung innerhalb von industriellen Automatisierungssystemen oder an überlagerte Systeme gewährleistet sein, beispielsweise bei einer Übertragung von Aufträgen an eine Maschine oder von Produktionsdaten der Maschine an überlagerte Systeme. Generell gelten diese Anforderungen für Kommunikationsbeziehungen zwischen IT-Systemen (information technology) und OT-Systemen (operational technology).

Neben Datensicherheit muss in Kommunikationsnetzen von industriellen Automatisierungssystemen auch eine deterministische Datenübermittlung und -verarbeitung sichergestellt sein. In industriellen Automatisierungssystemen ist deterministisches Verhalten insbesondere zur Gewährleistung von funktionaler Sicherheit (safety) erforderlich. Eine entsprechend Zero Trust-Konzepten vorgesehene gegenseitige Authentisierung gegenüber Kommunikationspartnern erschwert jedoch die deterministische Datenübermittlung und -verarbeitung.

In industriellen Automatisierungssystemen ist eine granulare Segmentierung von Kommunikationsnetzen üblich, wobei OSI-Schicht 2 Netzsegmente aus Verfügbarkeitsgründen so klein wie möglich gehalten werden. Auf diese Weise können eventuelle Fehler einfacher eingegrenzt werden. Außerdem ist eine granulare Segmentierung hilfreich, um mögliche Kommunikationsbeziehungen, beispielsweise mit nicht oder nur schwach geschützter Datenübermittlung, auf ein Mindestmaß zu beschränken. Derartige Anforderungen stehen jedoch im Widerspruch zu den Kommunikationsbedürfnissen insbesondere zwischen IT-Systemen und OT-Systemen. Somit stellen Perimeter-basierende Sicherheitskonzepte mit einer Vielzahl an Zellenschutz-Firewalls keine befriedigende Lösung dar.

Der vorliegenden Erfindung liegt daher die Aufgabe zugrunde, ein Verfahren zur gesicherten Übermittlung zeitkritischer Daten innerhalb eines Kommunikationssystems zu schaffen, das insbesondere in industriellen Automatisierungssystemen eine gleichzeitige Gewährleistung von Datensicherheit und Determinismus ermöglicht, und geeignete Vorrichtung zur technischen Realisierung des Verfahrens anzugeben.

Diese Aufgabe wird erfindungsgemäß durch ein Verfahren mit den in Anspruch 1 angegebenen Merkmalen und durch ein Kommunikationssystem mit den in Anspruch 15 angegebenen Merkmalen gelöst. Vorteilhafte Weiterbildungen der vorliegenden Erfindung sind in den abhängigen Patentansprüchen angegeben.

Entsprechend dem erfindungsgemäßen Verfahren zur gesicherten Übermittlung zeitkritischer Daten innerhalb eines Kommunikationssystems umfasst das Kommunikationssystem mehrere lokale Netze, in dem Daten mittels Switching übermittelt werden, zumindest ein gegenüber den lokalen Netzen überlagertes Netz, in dem Daten mittels Routing übermittelt werden, und ein Gateway-System zur Anbindung des Kommunikationssystems an zumindest ein ungesichertes externes Netz. Netzwerkschicht-Kommunikation (OSI-Schicht 3 Kommunikation) über das überlagerte Netz wird nur zwischen authentifizierten Systemkomponenten autorisiert. Dabei authentifizieren Switche jeweils angeschlossene Endgeräte und ordnen diese entsprechend einer jeweiligen Endgeräte-Identität einem physikalischen oder logischen lokalen Netz zu. Sicherungsschicht-Kommunikation (OSI-Schicht 3 Kommunikation) innerhalb der lokalen Netze wird implizit aufgrund einer Zuordnung der jeweiligen Endgeräte zum selben lokalen Netz autorisiert. Vorteilhafterweise ist das überlagerte Netz mit den lokalen Netzen und dem Gateway-System verbunden, wobei logische lokale Netze unterschiedlichen physikalischen lokalen Netzen zugeordnete Endgeräte umfassen.

Vorzugsweise bilden die lokalen Netze jeweils eine Broadcast-Domäne, wobei die Switche jeweils eine Datagrammfilter-Komponente umfassen, die Datenverkehr zwischen an den jeweiligen Switch angeschlossenen Endgeräten und von anderen lokalen Netzen umfassten Endgeräten filtert. Insbesondere filtern die Datagrammfilter-Komponenten den Datenverkehr jeweils entsprechend Filter-Regeln bzw. einer für das jeweilige Endgerät vorgegebenen Sicherheitsrichtlinie. Eine Sicherheitsrichtlinie (Security Policy, auch Sicherheitspolitik) ist üblicherweise ein technisches bzw. organisatorisches Dokument, mit dem in Unternehmen oder Institutionen bestehende Sicherheitsansprüche umgesetzt und erreicht werden sollen. Kernbestandteile sind insbesondere eine Sicherstellung von Integrität, Vertraulichkeit, Verfügbarkeit bzw. Authentizität zu schützender Informationen. Eine Sicherheitsrichtlinie für eine Datagrammfilter-Komponente oder für eine Firewall legt beispielsweise fest, wie eine konkrete Konfiguration erfolgt, welche Zugriffsrechte erteilt werden, wie eine Protokollierung erfolgt oder welche Abwehrmaßnahmen die Datagrammfilter-Komponente oder Firewall in einem Angriffsszenario trifft. Eine Sicherheitsrichtlinie kann insbesondere als Konfigurationsdatei, als XML-Datei, als eine Gerätekonfiguration vorliegen, die unmittelbar maschinell auswertbar ist. Ebenso ist es möglich, dass eine Sicherheitsrichtlinie in textueller Form vorliegt, die mittels auf künstlicher Intelligenz oder maschinellem Lernen basierender Verfahren ausgewertet wird. Außerdem ist es möglich, dass eine Sicherheitsrichtlinie in graphischer Form vorliegt, die mittels Bildverarbeitungs- bzw. Mustererkennungsverfahren ausgewertet wird.

Erfindungsgemäß wird Kommunikation auf OSI-Schicht 3-7 zwischen Endgeräten unterschiedlicher lokaler Netze bzw. mit Endgeräten im ungesicherten externen Netz mittels Zero Trust-Proxies autorisiert, die jeweils einem lokalen Netz zugeordnet sind. Dabei werden die Endgeräte jeweils pro Sitzung über den ihrem jeweiligen lokalen Netz zugeordneten Zero Trust-Proxy authentifiziert. Hierzu ist pro physikalischem lokalen Netz jeweils ein dortiger Zero Trust-Proxy bzw. pro logischem lokalen Netz jeweils eine Zero Trust-Proxy-Instanz im Gateway-System vorgesehen.

Mit der vorliegenden Erfindung können Zero Trust-Konzepte insbesondere für Kommunikationsbeziehungen zwischen IT-Systemen und OT-Systemen unter hinreichender Berücksichtigung von Determinismus-Anforderungen in OSI-Schicht 2 Kommunikationsnetzen realisiert werden. Hierfür ist entsprechend der vorliegenden Erfindung ein Schutzkonzept vorgesehen, das eine erste Schutzstufe, die Kommunikationsbeziehungen auf OSI-Schicht 2 unter Berücksichtigung von Determinismus-Anforderungen behandelt, und zweite Schutzstufe umfasst, die OSI-Schicht 3-7 betrifft und ein eine Nutzung von Zero Trust-Konzepten vorsieht. Durch das zweistufige Schutzkonzept kann eine deterministische OSI-Schicht 2 Kommunikation zwischen Automatisierungsgeräten gewährleistet und gleichzeitig ein deutlich gesteigertes Schutzniveau erreicht werden.

Entsprechend einer bevorzugten Ausgestaltung der vorliegenden Erfindung ermitteln die Switche IP-Adressen und Gerätenamen der jeweils angeschlossenen Endgeräte und übermitteln die IP-Adressen und Gerätenamen umfassende Betriebszustandsinformationen der Endgeräte bzw. Zugriffssteuerungslisten (access control lists) an eine vom Gateway-System umfasste Überwachungseinrichtung. Die Überwachungseinrichtung überprüft die Betriebsinformationen bzw. Zugriffssteuerungslisten anhand von Referenzinformationen auf Anomalien. Bei Anomalien sendet die Überwachungseinrichtung eine Warnung an den jeweiligen Switch bzw. leitet eine Steuerungsmaßnahme für das jeweilige Endgerät zur Problembehebung ein. Die Betriebsinformationen bzw. Zugriffssteuerungslisten umfassen vorteilhafterweise durch das jeweilige Endgerät verwendete Authentifizierungsmethoden, Zertifikate bzw. eine Position des jeweiligen Endgeräts. Darüber hinaus kann die Steuerungsmaßnahme für das jeweilige Endgerät ein Verschieben des Endgeräts in eine isolierte Netzwerkumgebung umfassen. Hierzu zählt insbesondere ein Sperren sämtlicher Ports für ein Endgerät, welches das Kommunikationssystem mit zu viel Last flutet, um dieses vom Kommunikationssystem zu trennen.

Vorzugsweise umfasst das Gateway-System eine als Policy Decision Point ausgestaltete Entscheidungskomponente zur Steuerung der Sicherungsschicht-Kommunikation durch Anwendung von Endgeräte-spezifischen Sicherheitsrichtlinien. Die Entscheidungskomponente umfasst wiederum eine Sicherheitsrichtlinien-Datenbank, in der Angaben über zugelassene Endgeräte, Rollen der jeweiligen Endgeräte und Endgeräte-Authentifizierungsanforderungen gespeichert sind. Darüber hinaus umfassen die Switche vorteilhafterweise jeweils eine integrierte, als Policy Enforcement Point ausgestaltete Umsetzungskomponente zur Steuerung der Sicherungsschicht-Kommunikation. Die Umsetzungskomponenten sind jeweils mit der Entscheidungskomponente verbunden und setzen jeweils durch die Entscheidungskomponente entsprechend den Sicherheitsrichtlinien vorgegebene Zugriffsberechtigungen bzw. -beschränkungen um. Auf diese Weise ist eine effiziente und zuverlässige Umsetzung von entsprechend Sicherheitsrichtlinien vorgegebene Zugriffsberechtigungen bzw. -beschränkungen gewährleistet.

Entsprechend einer weiteren vorteilhaften Ausgestaltung der vorliegenden Erfindung setzen obige Umsetzungskomponenten Zugriffsberechtigungen bzw. -beschränkungen in Bezug auf Endgeräte um, die an den Switch angeschlossen sind, in den die jeweilige Umsetzungskomponente integriert ist. Dabei können Inhalte der Sicherheitsrichtlinien-Datenbank administrativ bzw. mittels eines Intent-based Networking-Systems vorgegeben werden. Diese ermöglicht eine flexible Umsetzung von Sicherheitsrichtlinien in industriellen Automatisierungssystemen, insbesondere im Hinblick auf bestehende Automatisierungsgeräte ohne eigene oder nur mit unverhältnismäßig hohem Aufwand nachrüstbare Authentisierungsfunktionen.

Vorzugsweise werden mittels der Switche als Tunnelendpunkte Sicherungsschicht-Tunnel zwischen lokalen Netzen über das überlagerte Netz aufgebaut. Dabei bilden die Switche Tunnelendpunkte. Innerhalb der Sicherungsschicht-Tunnel gesendete Datenrahmen werden jeweils in Tunnel-Datenrahmen eingekapselt. Ein Einkapseln in bzw. ein Entkapseln der Tunnel-Daten erfolgt bevorzugt Hardware-implementiert. Auf diese Weise ist eine deterministische Datenübermittlung auch bei über mehrere physikalische lokale Netze verteilten logischen lokalen Netzen gewährleistet. Die Tunnel-Datenrahmen sind insbesondere VXLAN Frames oder Frames zur OSI-Schicht 2 Tunnelung von Datenrahmen. Darüber hinaus verschlüsseln die Switche vorteilhafterweise jeweils die Sicherungsschicht-Kommunikation über die Sicherungsschicht-Tunnel basierend auf IEEE 802.1AE (MACSec). Damit kann zur Realisierung einer sicheren und performanten Kommunikation auf OSI-Schicht 2 auf verbreitete und bewährte technische Grundlagen zurückgegriffen werden.

Das erfindungsgemäße Kommunikationssystem zur gesicherten Übermittlung zeitkritischer Daten ist zur Durchführung eines Verfahrens entsprechend den vorangehenden Ausführungen vorgesehen und umfasst mehrere lokale Netze zur Datenübermittlung mittels Switching, zumindest ein gegenüber den lokalen Netzen überlagertes Netz zur Datenübermittlung mittels Routing und ein Gateway-System zur Anbindung des Kommunikationssystems an zumindest ein ungesichertes externes Netz. Das überlagerte Netz ist dafür ausgestaltet und eingerichtet, dass Netzwerkschicht-Kommunikation über das überlagerte Netz nur zwischen authentifizierten Systemkomponenten autorisiert wird. Außerdem umfassen die lokalen Netze jeweils zumindest einen Switch, der dafür ausgestaltet und eingerichtet ist, jeweils angeschlossene Endgeräte zu authentifizieren und entsprechend einer jeweiligen Endgeräte-Identität einem physikalischen oder logischen lokalen Netz zuzuordnen.

Die lokalen Netze des erfindungsgemäßen Kommunikationssystems sind jeweils dafür ausgestaltet und eingerichtet, dass Sicherungsschicht-Kommunikation innerhalb der lokalen Netze implizit aufgrund einer Zuordnung der jeweiligen Endgeräte zum selben lokalen Netz autorisiert wird. Demgegenüber sind die Endgeräte jeweils dafür ausgestaltet und eingerichtet, dass Kommunikation auf OSI-Schicht 3-7 zwischen Endgeräten unterschiedlicher lokaler Netze bzw. mit Endgeräten im ungesicherten externen Netz mittels Zero Trust-Proxies, die jeweils einem lokalen Netz zugeordnet sind, autorisiert wird. Ferner sind die Zero Trust-Proxies jeweils dafür ausgestaltet und eingerichtet, dass die Endgeräte pro Sitzung über den ihrem jeweiligen lokalen Netz zugeordneten Zero Trust-Proxy zu authentifiziert werden. Dabei ist pro physikalischem lokalen Netz jeweils ein dortiger Zero Trust-Proxy bzw. pro logischem lokalen Netz jeweils eine Zero Trust-Proxy-Instanz im Gateway-System vorgesehen.

Die vorliegende Erfindung wird an einem Ausführungsbeispiel anhand der Zeichnung näher erläutert. Es zeigt
- Figur 1: eine Anordnung mit einem Kommunikationssystem zur gesicherten Übermittlung zeitkritischer Daten und einem ungesicherten externen Netz,
- Figur 2: eine schematische Darstellung einer gesicherten Übermittlung zeitkritischer Daten innerhalb der in Figur 1 dargestellten Anordnung.

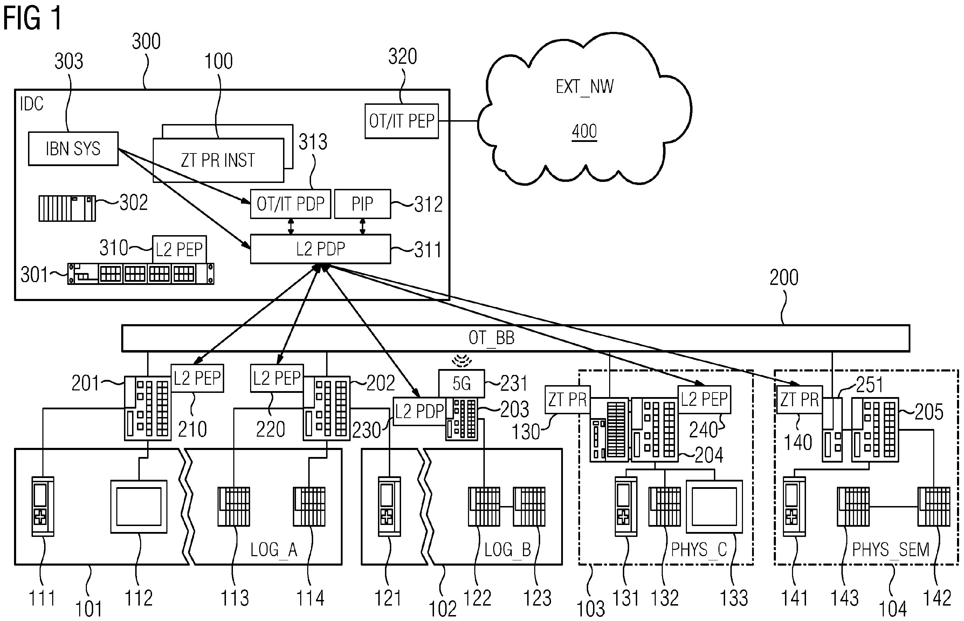

Die in Figur 1 dargestellte Anordnung umfasst ein Kommunikationssystem mit mehreren lokale Netzen 101-104 zur Datenübermittlung mittels Switching, einem gegenüber den lokalen Netzen 101-104 überlagerten Netz 200 zur Datenübermittlung mittels Routing und einem Gateway-System 300 zur Anbindung des Kommunikationssystems an ein ungesichertes externes Netz 400. Die lokalen Netze 101-104 bilden jeweils eine Broadcast-Domäne. Das überlagerte Netz 200 ist mit den lokalen Netzen 101-104 und dem Gateway-System 300 verbunden. Dabei können logische lokale Netze 101-102 unterschiedlichen physikalischen lokalen Netzen zugeordnete Endgeräte 111-114, 121-122 umfassen.

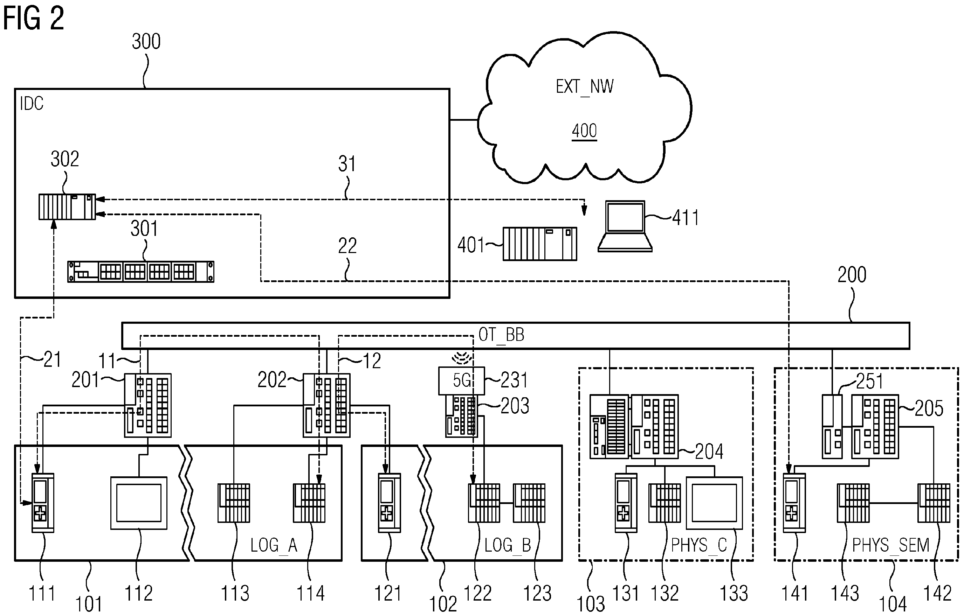

Beispielsweise sind die Endgeräte 111-112 eines ersten logischen lokalen Netzes 101 an einen ersten Switch 201 angeschlossen, der über das überlagerte Netz 200 mit einem zweiten Switch 202 verbunden ist, an den die Endgeräte 113-114 des ersten logischen lokalen Netzes 101 angeschlossen sind. Zwischen dem ersten Switch 201 und dem zweiten Switch 202 erfolgt eine Sicherungsschicht-Kommunikation (OSI-Schicht 2) innerhalb des ersten logischen lokalen Netzes 101 entsprechend Figur 2 mittels eines Sicherungsschicht-Tunnels 11. Dabei bilden die Switche 201-202 Tunnelendpunkte, und innerhalb des Sicherungsschicht-Tunnels 11 gesendete Datenrahmen werden jeweils in Tunnel-Datenrahmen eingekapselt.

An den zweiten Switch 202 ist auch ein Endgerät 121 eines zweiten logischen Netzes 102 angeschlossen, das auch ein an einen dritten Switch 203 angeschlossenes Endgerät 122 umfasst. Das Endgerät 122 ist wiederum mit einem Peripheriegerät 123 verbunden. Im vorliegenden Ausführungsbeispiel ist der dritte Switch 203 über einen 5G-Mobilfunk-Router 231 mit dem überlagerten Netz 200 verbunden. In entsprechender Weise wie beim ersten logischen lokalen Netz 101 erfolgt zwischen dem zweiten Switch 202 und dem dritten Switch 203 eine Kommunikation innerhalb des zweiten logischen lokalen Netzes 102 entsprechend Figur 2 mittels eines Sicherungsschicht-Tunnels 12. Dabei bilden die Switche 202-203 Tunnelendpunkte, und innerhalb des Sicherungsschicht-Tunnels 12 gesendete Datenrahmen werden jeweils in Tunnel-Datenrahmen eingekapselt.

Die an einen vierten Switch 204 angeschlossenen Endgeräte 131-133 sind einem gemeinsamen physikalischen lokalen Netz 103 zugeordnet. Ein fünfter Switch 205 ist einem physikalischen lokalen Netz 104 zugeordnet, das von einer Serienmaschine umfasst ist, die mehrere durch die Endgeräte 141-142 und ein Peripheriegerät 143 gebildete Automatisierungskomponenten aufweist. Dabei ist das Peripheriegerät 143 an das Endgerät 142 angeschlossen.

Die Endgeräte bzw. Peripheriegeräte 111-114, 121-123, 131-133, 141-143 sind insbesondere physische oder virtuelle Hosts, die Daten bzw. Ressourcen für andere Hosts bereitstellen können. Die Daten bzw. Ressourcen können beispielsweise Diensten bzw. Steuerungs- und Überwachungsanwendungen eines industriellen Automatisierungssystems zugeordnet sein, die exemplarisch für zeitkritische Dienste bzw. Anwendungen sind.

Im vorliegenden Ausführungsbeispiel implementieren die Endgeräte bzw. Peripheriegeräte 111-114, 121-123, 131-133, 141-143 Funktionen von Steuerungsgeräten eines industriellen Automatisierungssystems, wie speicherprogrammierbaren Steuerungen, oder von Feldgeräten, wie Sensoren oder Aktoren. Dabei dienen die Endgeräte bzw. Peripheriegeräte 111-114, 121-123, 131-133, 141-143 einem Austausch von Steuerungs- und Messgrößen mit durch Steuerungsgeräte gesteuerten Maschinen oder Vorrichtungen. Insbesondere sind die Steuerungsgeräte für eine Ermittlung geeigneter Steuerungsgrößen aus erfassten Messgrö-ßen vorgesehen.

Alternativ oder zusätzlich können die Endgeräte bzw. Peripheriegeräte 111-114, 121-123, 131-133, 141-143 jeweils eine Bedien- und Beobachtungsstation implementieren und zur Visualisierung von Prozessdaten bzw. Mess- und Steuerungsgrößen dienen, die durch Steuerungsgeräte oder andere Automatisierungsgeräte verarbeitet bzw. erfasst werden. Insbesondere kann eine Bedien- und Beobachtungsstation zur Anzeige von Werten eines Regelungskreises und zur Veränderung von Regelungsparametern oder -programmen verwendet werden.

Im vorliegenden Ausführungsbeispiel umfasst das Gateway-System 300 insbesondere einen mit dem überlagerten Netz 200 verbundenen Switch 301, einen mit diesem Switch 301 sowie mit dem ungesicherten externen Netz 400 verbundenen Router 302 und ein Intent-based Networking-System 303. Mittels sämtlicher Switche 201-205, 301 können Sicherungsschicht-Tunnel zwischen unterschiedlichen lokalen Netzen 101-105 bzw. zum Gateway-System 300 über das überlagerte Netz 200 aufgebaut werden.

In entsprechender Weise wie den beiden logischen lokalen Netzen 101-102 bilden die Switche 201-205, 301 bei einer Sicherungsschicht-Kommunikation zwischen unterschiedlichen lokalen Netzen 101-104 bzw. zum Gateway-System 300 über das überlagerte Netz 200 Tunnelendpunkte. Auch dabei werden innerhalb der Sicherungsschicht-Tunnel gesendete Datenrahmen jeweils in Tunnel-Datenrahmen eingekapselt. Ein Einkapseln in bzw. ein Entkapseln der Tunnel-Daten erfolgt vorzugsweise Hardware-implementiert, insbesondere aus Performance-Gründen hinsichtlich einer Gewährleistung einer deterministischen Datenübermittlung bei Verwendung von Sicherungsschicht-Tunneln. Die die Tunnel-Datenrahmen können beispielsweise VXLAN Frames entsprechend IETF RFC 7348 oder Frames zur OSI-Schicht 2 Tunnelung von Datenrahmen sein. Die Switche 201-205, 301 verschlüsseln die Sicherungsschicht-Kommunikation über die Sicherungsschicht-Tunnel jeweils basierend auf IEEE 802.1AE (MACSec) .

Die Switche 201-205 umfassen jeweils eine Datagrammfilter-Komponente, die Datenverkehr zwischen an den jeweiligen Switch 201-205 angeschlossenen Endgeräten bzw. deren Peripheriegeräten 111-114, 121-123, 131-133, 141-143 und von anderen lokalen Netzen umfassten Endgeräten bzw. Peripheriegeräten filtert. Die Datagrammfilter-Komponenten filtern den Datenverkehr jeweils entsprechend Filter-Regeln bzw. entsprechend einer für das jeweilige Endgerät bzw. Peripheriegerät 111-114, 121-123, 131-133, 141-143 vorgegebenen Sicherheitsrichtlinie.

Wesentlich ist, dass Netzwerkschicht-Kommunikation (OSI-Schicht 3) über das überlagerte Netz 200 nur zwischen authentifizierten Systemkomponenten autorisiert wird. Insbesondere hierzu authentifizieren die Switche 201-205 jeweils angeschlossene Endgeräte bzw. deren Peripheriegeräte 111-114, 121-123, 131-133, 141-143 und ordnen diese entsprechend einer jeweiligen Endgeräte-Identität bzw. Peripheriegeräte-Identität einem physikalischen oder logischen lokalen Netz 101-104 zu. Sicherungsschicht-Kommunikation innerhalb der lokalen Netze 101-104 wird implizit aufgrund einer Zuordnung der jeweiligen Endgeräte bzw. deren Peripheriegeräte 111-114, 121-123, 131-133, 141-143 zum selben lokalen Netz 101-104 autorisiert.

Kommunikation 21-22 auf OSI-Schicht 3-7 zwischen Endgeräten bzw. Peripheriegeräten 111-114, 121-123, 131-133, 141-143 unterschiedlicher lokaler Netze 101-104 bzw. Kommunikation auf OSI-Schicht 3-7 mit Endgeräten bzw. Peripheriegeräten 411 im ungesicherten externen Netz 400 wird mittels Zero Trust-Proxies 100, 130, 140 autorisiert, die jeweils einem lokalen Netz zugeordnet sind. Im vorliegenden Ausführungsbeispiel erfolgt diese Kommunikation 21-22, 31 über den Router 302 des Gateway-Systems 300. Bei der Kommunikation 31 mit den Endgeräten bzw. Peripheriegeräten 411 im ungesicherten externen Netz 400 erfolgt diese zusätzlich über einen Router 401 des ungesicherten externen Netzes 400.

Bei der Kommunikation 21-22, 31 auf OSI-Schicht 3-7 werden die Endgeräte bzw. Peripheriegeräte 111-114, 121-123, 131-133, 141-143 jeweils pro Sitzung über den ihrem jeweiligen lokalen Netz 101-104 zugeordneten Zero Trust-Proxy 100, 130, 140 authentifiziert. Dabei ist für die physikalischen lokalen Netze 103-104 jeweils ein dortiger Zero Trust-Proxy 130, 140 vorgesehen, während für die logischen lokalen Netze 101-102 jeweils eine Zero Trust-Proxy-Instanz 100 im Gateway-System 300 vorgesehen ist. Zusätzlich wird eine Zero Trust-Proxy-Instanz 100 für die Endgeräte bzw. Peripheriegeräte 411 im ungesicherten externen Netz 400 bereitgestellt. Eine Authentifizierung der Endgeräte bzw. Peripheriegeräte 111-114, 121-123, 131-133, 141-143 kann allgemein beispielsweise anhand von Geräteadressen (IP, MAC) oder Gerätezertifikaten erfolgen.

Im vorliegenden Ausführungsbeispiel ermitteln die Switche 201-205 IP-Adressen und Gerätenamen der jeweils angeschlossenen Endgeräte bzw. der Peripheriegeräte 111-114, 121-123, 131-133, 141-143. Die Switche 201-205 übermitteln diese IP-Adressen und Gerätenamen umfassende Betriebszustandsinformationen der Endgeräte bzw. Peripheriegeräte 111-114, 121-123, 131-133, 141-143 bzw. Zugriffssteuerungslisten an eine vom Gateway-System 300 umfasste Überwachungseinrichtung 312. Die Überwachungseinrichtung 312 umfasst vorzugsweise einen Policy Information Point (PIP) und überprüft die Betriebsinformationen bzw. Zugriffssteuerungslisten anhand von Referenzinformationen auf Anomalien. Bei Anomalien sendet die Überwachungseinrichtung 312 eine Warnung an den jeweiligen Switch 201-205. Alternativ oder zusätzlich hierzu leitet die Überwachungseinrichtung 312 eine Steuerungsmaßnahme für das jeweilige Endgerät oder Peripheriegerät 111-114, 121-123, 131-133, 141-143 zur Problembehebung ein. Die Betriebsinformationen bzw. Zugriffssteuerungslisten umfassen insbesondere durch das jeweilige Endgerät bzw. Peripheriegerät 111-114, 121-123, 131-133, 141-143 verwendete Authentifizierungsmethoden, Zertifikate bzw. eine Position des jeweiligen Endgeräts oder Peripheriegeräts. Die durch die Überwachungseinrichtung 312 eingeleitete Steuerungsmaßnahme für das jeweilige Endgerät oder Peripheriegerät 111-114, 121-123, 131-133, 141-143 kann beispielsweise ein Verschieben des Endgeräts bzw. Peripheriegeräts 111-114, 121-123, 131-133, 141-143 in eine isolierte Netzwerkumgebung umfassen, insbesondere durch Sperren sämtlicher Ports für das jeweilige Endgerät oder Peripheriegerät 111-114, 121-123, 131-133, 141-143. Auf diese Weise kann ein Endgerät oder Peripheriegerät 111-114, 121-123, 131-133, 141-143, welches das Kommunikationssystem mit zu viel Last flutet, vom Kommunikationssystem getrennt werden.

Darüber hinaus umfasst das Gateway-System 300 im vorliegenden Ausführungsbeispiel eine als Policy Decision Point (L2 PDP) ausgestaltete Entscheidungskomponente 311 zur Steuerung der Sicherungsschicht-Kommunikation durch Anwendung von Endgeräte- bzw. Peripheriegeräte-spezifischen Sicherheitsrichtlinien. Für die Kommunikation 21-22, 31 auf OSI-Schicht 3-7 bzw. mit dem externen ungesicherten Netz 400 sind ein separater Policy Decision Point 313 (OT/IT PDP) sowie ein diesem Policy Decision Point 313 zugeordneter Policy Enforcement Point 320 (OT/IT PEP) vorgesehen.

Die Entscheidungskomponente 311 umfasst eine Sicherheitsrichtlinien-Datenbank, in der Angaben über zugelassene Endgeräte bzw. Peripheriegeräte 111-114, 121-123, 131-133, 141-143, Rollen der jeweiligen Endgeräte bzw. Peripheriegeräte und Endgeräte- bzw. Peripheriegeräte-Authentifizierungsanforderungen gespeichert sind. Demgegenüber umfassen die Switche 201-204, 301 jeweils eine integrierte, als Policy Enforcement Point (L2 PEP) ausgestaltete Umsetzungskomponente 210, 220, 230, 240, 310 zur Steuerung der Sicherungsschicht-Kommunikation. Bei der Serienmaschine ist die Umsetzungskomponente in ein Security Gateway 251 der Serienmaschine integriert, über die der Switch 205 der Serienmaschine an das überlagerte 200 angebunden ist. Zusätzlich umfasst das Security Gateway 251 der Serienmaschine eine Funktionseinheit zur Umsetzung von Kommunikationsnetzadressen (network address translation - NAT), da die Kommunikationsnetzadressen der Automatisierungskomponenten der Serienmaschine innerhalb der Serienmaschine komplett eigenständig verwaltet bzw. vorgegeben werden.

Die Umsetzungskomponenten 210, 220, 230, 240, 310 bzw. das Security Gateway 251 sind jeweils mit der Entscheidungskomponente 311 funktional verbunden und setzen jeweils durch die Entscheidungskomponente 311 entsprechend den Sicherheitsrichtlinien vorgegebene Zugriffsberechtigungen bzw. -beschränkungen. Insbesondere setzen die Umsetzungskomponenten 210, 220, 230, 240, Zugriffsberechtigungen bzw. -beschränkungen in Bezug auf Endgeräte bzw. Peripheriegeräte 111-114, 121-123, 131-133, 141-143 um, die unmittelbar oder mittelbar an den Switch 201-204 angeschlossen sind, in den die jeweilige Umsetzungskomponente 210, 220, 230, 240 integriert ist. Das Security Gateway 251 der Serienmaschine setzt Zugriffsberechtigungen bzw. -beschränkungen in Bezug auf Endgeräte bzw. Peripheriegeräte 141-143 um, die von der Serienmaschine umfasst sind. Eine Kommunikation zwischen der Entscheidungskomponente 311 einerseits und den Umsetzungskomponenten 210, 220, 230, 240 bzw. dem Security Gateway 251 andererseits erfolgt vorzugsweise entsprechend RADIUS- oder -DIAMETER Protokoll.

Inhalte der Sicherheitsrichtlinien-Datenbank der Entscheidungskomponente 311 können administrativ durch Benutzereingriff bzw. automatisiert mittels des Intent-based Networking-Systems 303 vorgegeben werden. In entsprechender Weise können auch Inhalte einer Sicherheitsrichtlinien-Datenbank des Policy Decision Point 313 für die die Kommunikation 21-22, 31 auf OSI-Schicht 3-7 bzw. mit dem externen ungesicherten Netz 400 vorgegeben werden.

## Patentansprüche

1. Verfahren zur gesicherten Übermittlung zeitkritischer Daten innerhalb eines Kommunikationssystems, bei dem
- das Kommunikationssystem mehrere lokale Netze (101-104), in dem Daten mittels Switching übermittelt werden, zumindest ein gegenüber den lokalen Netzen überlagertes Netz (200), in dem Daten mittels Routing übermittelt werden, und ein Gateway-System (300) zur Anbindung des Kommunikationssystems an zumindest ein ungesichertes externes Netz (400) umfasst,
- Netzwerkschicht-Kommunikation über das überlagerte Netz nur zwischen authentifizierten Systemkomponenten autorisiert wird,
- Switche (201-205) jeweils angeschlossene Endgeräte (111-114, 121-122, 131-133, 141-142) authentifizieren und entsprechend einer jeweiligen Endgeräte-Identität einem physikalischen oder logischen lokalen Netz zuordnen,
- Sicherungsschicht-Kommunikation innerhalb der lokalen Netze implizit aufgrund einer Zuordnung der jeweiligen Endgeräte zum selben lokalen Netz autorisiert wird,
- Kommunikation auf OSI-Schicht 3-7 zwischen Endgeräten unterschiedlicher lokaler Netze und/oder mit Endgeräten im ungesicherten externen Netz mittels Zero Trust-Proxies (100, 130, 140), die jeweils einem lokalen Netz zugeordnet sind, autorisiert wird,
- die Endgeräte jeweils pro Sitzung über den ihrem jeweiligen lokalen Netz zugeordneten Zero Trust-Proxy authentifiziert werden, wobei pro physikalischem lokalen Netz (103-104) jeweils ein dortiger Zero Trust-Proxy (130, 140) und/oder pro logischem lokalen Netz (101-102) jeweils eine Zero Trust-Proxy-Instanz (100) im Gateway-System vorgesehen ist.

2. Verfahren nach Anspruch 1,
bei dem die lokalen Netze jeweils eine Broadcast-Domäne bilden und bei dem die Switche jeweils eine Datagrammfilter-Komponente umfassen, die Datenverkehr zwischen an den jeweiligen Switch angeschlossenen Endgeräten und von anderen lokalen Netzen umfassten Endgeräten filtert.

3. Verfahren nach Anspruch 2,
bei dem die Datagrammfilter-Komponenten den Datenverkehr jeweils entsprechend Filter-Regeln und/oder einer für das jeweilige Endgerät vorgegebenen Sicherheitsrichtlinie filtern.

4. Verfahren nach einem der Ansprüche 1 bis 3,
bei dem die Switche (201-205) IP-Adressen und Gerätenamen der jeweils angeschlossenen Endgeräte ermitteln und die IP-Adressen und Gerätenamen umfassende Betriebszustandsinformationen der Endgeräte und/oder Zugriffssteuerungslisten an eine vom Gateway-System (300) umfasste Überwachungseinrichtung (312) übermitteln, bei dem die Überwachungseinrichtung die Betriebsinformationen und/oder Zugriffssteuerungslisten anhand von Referenzinformationen auf Anomalien überprüft und bei Anomalien eine Warnung an den jeweiligen Switch sendet und/oder eine Steuerungsmaßnahme für das jeweilige Endgerät zur Problembehebung einleitet.

5. Verfahren nach Anspruch 4,
bei dem die Betriebsinformationen und/oder Zugriffssteuerungslisten durch das jeweilige Endgerät verwendete Authentifizierungsmethoden und/oder Zertifikate und/oder eine Position des jeweiligen Endgeräts umfassen.

6. Verfahren nach einem der Ansprüche 4 oder 5,
bei dem die Steuerungsmaßnahme für das jeweilige Endgerät ein Verschieben des Endgeräts in eine isolierte Netzwerkumgebung umfasst.

7. Verfahren nach einem der Ansprüche 1 bis 6,
bei dem das Gateway-System eine als Policy Decision Point ausgestaltete Entscheidungskomponente (311) zur Steuerung der Sicherungsschicht-Kommunikation durch Anwendung von Endgeräte-spezifischen Sicherheitsrichtlinien umfasst, bei dem die Entscheidungskomponente eine Sicherheitsrichtlinien-Datenbank umfasst, in der Angaben über zugelassene Endgeräte, Rollen der jeweiligen Endgeräte und Endgeräte-Authentifizierungsanforderungen gespeichert sind, bei dem die Switche (201-204) jeweils eine integrierte, als Policy Enforcement Point ausgestaltete Umsetzungskomponente (210, 220, 230, 240) zur Steuerung der Sicherungsschicht-Kommunikation umfassen, bei dem die Umsetzungskomponenten jeweils mit der Entscheidungskomponente verbunden sind und bei dem die Umsetzungskomponenten jeweils durch die Entscheidungskomponente entsprechend den Sicherheitsrichtlinien vorgegebene Zugriffsberechtigungen und/oder -beschränkungen umsetzen.

8. Verfahren nach Anspruch 7,
bei dem die Umsetzungskomponenten Zugriffsberechtigungen und/oder -beschränkungen in Bezug auf Endgeräte umsetzen, die an den Switch angeschlossen sind, in den die jeweilige Umsetzungskomponente integriert ist.

9. Verfahren nach einem der Ansprüche 7 oder 8,
bei dem Inhalte der Sicherheitsrichtlinien-Datenbank administrativ und/oder mittels eines Intent-based Networking-Systems (303) vorgegeben werden.

10. Verfahren nach einem der Ansprüche 1 bis 9,
bei dem mittels der Switche Sicherungsschicht-Tunnel zwischen lokalen Netzen über das überlagerte Netz aufgebaut werden, bei dem die Switche Tunnelendpunkte bilden und bei dem innerhalb der Sicherungsschicht-Tunnel gesendete Datenrahmen jeweils in Tunnel-Datenrahmen eingekapselt werden.

11. Verfahren nach Anspruch 10,
bei dem ein Einkapseln in und/oder ein Entkapseln der Tunnel-Daten Hardware-implementiert erfolgt.

12. Verfahren nach einem der Ansprüche 10 oder 11,
bei dem die Tunnel-Datenrahmen VXLAN Frames oder Frames zur OSI-Schicht 2 Tunnelung von Datenrahmen sind.

13. Verfahren nach einem der Ansprüche 10 bis 12,
bei dem die Switche jeweils die Sicherungsschicht-Kommunikation über die Sicherungsschicht-Tunnel basierend auf IEEE 802.1AE, MACSec, verschlüsseln.

14. Verfahren nach einem der Ansprüche 1 bis 13,
bei dem das überlagerte Netz (200) mit den lokalen Netzen (101-104) und dem Gateway-System (30) verbunden ist und bei dem logische lokale Netze (101-102) unterschiedlichen physikalischen lokalen Netzen zugeordnete Endgeräte (111-114, 121-122) umfassen.

15. Kommunikationssystem zur gesicherten Übermittlung zeitkritischer Daten, bei dem
- das Kommunikationssystem mehrere lokale Netze (101-104) zur Datenübermittlung mittels Switching, zumindest ein gegenüber den lokalen Netzen überlagertes Netz (200) zur Datenübermittlung mittels Routing und ein Gateway-System (300) zur Anbindung des Kommunikationssystems an zumindest ein ungesichertes externes Netz (400) umfasst,
- das überlagerte Netz dafür ausgestaltet und eingerichtet ist, dass Netzwerkschicht-Kommunikation über das überlagerte Netz nur zwischen authentifizierten Systemkomponenten zu autorisiert wird,
- die lokalen Netze (101-104) jeweils zumindest einen Switch (201-205) umfassen, der dafür ausgestaltet und eingerichtet ist, jeweils angeschlossene Endgeräte (111-114, 121-122, 131-133, 141-142) zu authentifizieren und entsprechend einer jeweiligen Endgeräte-Identität einem physikalischen oder logischen lokalen Netz zuzuordnen,
- die lokalen Netze jeweils dafür ausgestaltet und eingerichtet sind, dass Sicherungsschicht-Kommunikation innerhalb der lokalen Netze implizit aufgrund einer Zuordnung der jeweiligen Endgeräte zum selben lokalen Netz autorisiert wird,
- die Endgeräte jeweils dafür ausgestaltet und eingerichtet sind, dass Kommunikation auf OSI-Schicht 3-7 zwischen Endgeräten unterschiedlicher lokaler Netze und/oder mit Endgeräten im ungesicherten externen Netz mittels Zero Trust-Proxies (100, 130, 140), die jeweils einem lokalen Netz zugeordnet sind, autorisiert wird,
- die Zero Trust-Proxies jeweils dafür ausgestaltet und eingerichtet sind, dass die Endgeräte pro Sitzung über den ihrem jeweiligen lokalen Netz zugeordneten Zero Trust-Proxy authentifiziert werden, wobei pro physikalischem lokalen Netz (103-104) jeweils ein dortiger Zero Trust-Proxy (130, 140) und/oder pro logischem lokalen Netz (101-102) jeweils eine Zero Trust-Proxy-Instanz (100) im Gateway-System vorgesehen ist.

## Claims

1. Method for securely transmitting time-critical data within a communication system, in which
- the communication system comprises multiple local area networks (101-104), in which data are transmitted by means of switching, at least one network (200) at a higher level than the local area networks, in which data are transmitted by means of routing, and a gateway system (300) for linking the communication system to at least one unsecured external network (400),
- network layer communication by way of the higher-level network is authorized only between authenticated system components,
- switches (201-205) each authenticate connected terminals (111-114, 121-122, 131-133, 141-142) and assign them to a physical or logical local area network in accordance with a respective terminal identity,
- data link layer communication within the local area networks is implicitly authorized on the basis of an association between the respective terminals and the same local area network,
- communication on OSI layers 3-7 between terminals in different local area networks and/or with terminals in the unsecured external network is authorized by means of zero trust proxies (100, 130, 140) that are each associated with a local area network,
- the terminals are each authenticated for each session by way of the zero trust proxy associated with their respective local area network, wherein for each physical local area network (103-104) a respective zero trust proxy (130, 140) therein and/or for each logical local area network (101-102) a respective zero trust proxy instance (100) is provided in the gateway system.

2. Method according to Claim 1,
in which the local area networks each form a broadcast domain and in which the switches each comprise a datagram filter component that filters data traffic between terminals connected to the respective switch and terminals that other local area networks comprise.

3. Method according to Claim 2,
in which the datagram filter components each filter the data traffic in accordance with filter rules and/or a security guideline predefined for the respective terminal.

4. Method according to one of Claims 1 to 3,
in which the switches (201-205) determine IP addresses and device names for the connected terminals and transmit operating state information, comprising the IP addresses and device names, pertaining to the terminals and/or access control lists to a monitoring device (312) that the gateway system (300) comprises, in which the monitoring device checks the operating information and/or access control lists for anomalies on the basis of reference information and, in the event of anomalies, sends a warning to the respective switch and/or initiates a control measure for the respective terminal in order to rectify the problem.

5. Method according to Claim 4,
in which the operating information and/or access control lists comprise authentication methods used by the respective terminal and/or certificates and/or a position of the respective terminal.

6. Method according to either of Claims 4 and 5,
in which the control measure for the respective terminal comprises moving the terminal to an isolated network environment.

7. Method according to one of Claims 1 to 6,
in which the gateway system comprises a decision component (311), configured as a policy decision point, for controlling the data link layer communication by applying terminal-specific security guidelines, in which the decision component comprises a security guideline database that stores details of approved terminals, roles of the respective terminals and terminal authentication requirements, in which the switches (201-204) each comprise an integrated implementation component (210, 220, 230, 240), configured as a policy enforcement point, for controlling the data link layer communication, in which the implementation components are each connected to the decision component and in which the implementation components each implement access permissions and/or restrictions predefined by the decision component in accordance with the security guidelines.

8. Method according to Claim 7,
in which the implementation components implement access permissions and/or restrictions with regard to terminals connected to the switch in which the respective implementation component is integrated.

9. Method according to either of Claims 7 and 8,
in which content of the security guideline database is predefined administratively and/or by means of an intent-based networking system (303).

10. Method according to one of Claims 1 to 9,
in which the switches are used to set up data link layer tunnels between local area networks via the higher-level network, in which the switches form tunnel endpoints and in which data frames sent within the data link layer tunnels are each encapsulated in tunnel data frames.

11. Method according to Claim 10,
in which encapsulation into and/or decapsulation from the tunnel data is/are carried out in hardware-implemented fashion.

12. Method according to either of Claims 10 and 11,
in which the tunnel data frames are VXLAN frames or frames for OSI layer 2 tunnelling of data frames.

13. Method according to one of Claims 10 to 12,
in which the switches each encrypt the data link layer communication via the data link layer tunnels on the basis of IEEE 802.1AE, MACSec.

14. Method according to one of Claims 1 to 13,
in which the higher-level network (200) is connected to the local area networks (101-104) and the gateway system (30) and in which logical local area networks (101-102) comprise terminals (111-114, 121-122) associated with different physical local area networks.

15. Communication system for securely transmitting time-critical data, in which
- the communication system comprises multiple local area networks (101-104) for data transmission by means of switching, at least one network (200) at a higher level than the local area networks for data transmission by means of routing, and a gateway system (300) for linking the communication system to at least one unsecured external network (400),
- the higher-level network is configured and designed so that network layer communication by way of the higher-level network is authorized only between authenticated system components,
- the local area networks (101-104) each comprise at least one switch (201-205) that is configured and designed to authenticate connected terminals (111-114, 121-122, 131-133, 141-142) and to assign them to a physical or logical local area network in accordance with a respective terminal identity,
- the local area networks are each configured and designed so that data link layer communication within the local area networks is implicitly authorized on the basis of an association between the respective terminals and the same local area network,
- the terminals are each configured and designed so that communication on OSI layers 3-7 between terminals in different local area networks and/or with terminals in the unsecured external network is authorized by means of zero trust proxies (100, 130, 140) that are each associated with a local area network,
- the zero trust proxies are each configured and designed so that the terminals are authenticated for each session by way of the zero trust proxy associated with their respective local area network, wherein for each physical local area network (103-104) a respective zero trust proxy (130, 140) therein and/or for each logical local area network (101-102) a respective zero trust proxy instance (100) is provided in the gateway system.

## Revendications

1. Procédé de transmission sécurisée de données à temps critique dans un système de communication, dans lequel
- le système de communication comprend plusieurs réseaux (101-104) locaux, dans lequel on transmet des données au moyen d'un switching, au moins, par rapport aux réseaux locaux, un réseau (200) supérieur hiérarchiquement, dans lequel on transmet des données au moyen d'un routing, et un système (300) de passerelle de raccordement du système de communication à au moins un système (400) extérieur non sécurisé,
- on n'autorise une communication à couche de réseau par le réseau supérieur hiérarchiquement qu'entre des composants authentifiés du système,
- des switchs (201-205) authentifient des terminaux (111-114, 121-122, 131-133, 141-142) raccordés respectivement et les affectent conformément à une identité de terminal respective à un réseau local physique ou logique,
- on autorise une communication à couche de sécurisation dans les réseaux locaux de manière implicite, sur la base d'une affectation des terminaux respectifs au même réseau local,
- on autorise une communication sur couche 3-7 OSI entre des terminaux de réseaux locaux différents et/ou avec des terminaux du réseau extérieur non sécurisé, au moyen de zero trust-proxies (100, 130, 140), qui sont affectés respectivement à un réseau local,
- on authentifie les terminaux respectivement par session par les zero trust-proxy affectés à leur réseau local respectif, dans lequel il est prévu par réseau (103-104) local physique respectivement un zero trust-proxy (130, 140) qui s'y trouve et/ou par réseau (101-102) local logique respectivement une instance (100) zero trust-proxy dans le système de passerelle.

2. Procédé suivant la revendication 1,
dans lequel les réseaux locaux forment chacun un domaine broadcast et dans lequel les switchs comprennent chacun un composant de filtrage de datagramme, qui filtre le trafic de données entre des terminaux raccordés au switch respectif et des terminaux impliqués par d'autres réseaux locaux.

3. Procédé suivant la revendication 2,
dans lequel les composants de filtrage de datagramme filtrent le trafic des données respectivement conformément à des règles de filtrage et/ou à une directive de sécurisation donnée à l'avance pour le terminal respectif.

4. Procédé suivant l'une des revendications 1 à 3,
dans lequel les switchs (201-205) déterminent des adresses IP des dénominations d'appareils des terminaux raccordés respectivement et transmet à un dispositif (312) de contrôle, impliqué par le système (300) de passerelle, des informations d'état de fonctionnement, comprenant les adresses IP et les dénominations d'appareils des terminaux et/ou des listes de commande d'accès, dans lequel le dispositif de contrôle contrôle la présence d'anomalies dans les informations de fonctionnement et/ou les listes de commande d'accès, à l'aide d'informations de référence et s'il y a des anomalies, envoie une alerte au switch respectif et/ou lance une mesure de commande du terminal respectif pour faire disparaître le problème.

5. Procédé suivant la revendication 4,
dans lequel les informations de fonctionnement et/ou les listes de commande d'accès comprennent des méthodes d'authentification utilisées par le terminal respectif et/ou des certificats et/ou une position du terminal respectif.

6. Procédé suivant l'une des revendications 4 ou 5,
dans lequel les mesures de commande du terminal respectif comprennent un déplacement du terminal dans un environnement isolé du réseau.

7. Procédé suivant l'une des revendications 1 à 6,
dans lequel le système de passerelle comprend un composant (311) de décision conformé en policy decision point pour la commande de la communication à couche sécurisée, par application de directives de sécurité spécifiques aux terminaux, dans lequel le composant de décision comprend une base de données de directives de sécurité, dans laquelle sont mises en mémoire des indications sur des terminaux abandonnés, des rôles des terminaux respectifs et des demandes d'authentification de terminaux, dans lequel les switchs (201-204) comprennent, pour la commande de la communication à couche de sécurisation, respectivement un composant (210, 220, 230, 240) intégré de transposition conformé en policy enforcement point, dans lequel les composants de transposition sont reliés respectivement au composant de décision, et dans lequel les composants de transposition transforment respectivement, par le composant de décision, des justifications d'accès et/ou des limitations d'accès prescrites conformément aux directives de sécurité.

8. Procédé suivant la revendication 7,
dans lequel les composants de transposition transposent des justifications d'accès et/ou des limitations d'accès se rapportant à des terminaux, qui sont raccordés au switch, dans lesquels le composant de transposition respectif est intégré.

9. Procédé suivant l'une des revendications 7 ou 8,
dans lequel on prescrit des contenus de la base de données de directives de sécurité administrativement et/ou au moyen d'un système (303) de Intent-based-Networking.

10. Procédé suivant l'une des revendications 1 à 9,
dans lequel, au moyen des switchs, on établit, par le réseau supérieur hiérarchiquement, des tunnels à couche de sécurisation entre des réseaux locaux, dans lequel les switchs forment des points d'extrémité de tunnel et dans lequel on incorpore, respectivement dans des trames de données de tunnel, des trames de données envoyées dans le tunnel à couche de sécurisation.

11. Procédé suivant la revendication 10,
dans lequel l'incorporation et/ou la désincorporation des données de tunnel s'effectue par mise en oeuvre de matériel.

12. Procédé suivant l'une des revendications 10 ou 11,
dans lequel les trames de données tunnel sont des trames VXLAN ou des trames de tunnelage de couche 2 OSI de trame de données.

13. Procédé suivant l'une des revendications 10 à 12,
dans lequel les switchs chiffrent respectivement la communication à couche de sécurisation par les tunnels à couche de sécurisation reposant sur IEEE 802.1AE, MACSec.

14. Procédé suivant l'une des revendications 1 à 13,
dans lequel le réseau (200) supérieur hiérarchiquement est relié aux réseaux (101-104) locaux et au système (30) de passerelle et dans lequel des réseaux (101-102) locaux logiques comprennent des terminaux (111-114, 121-122) affectés à des réseaux locaux physiques différents.

15. Système de communication pour la transmission sécurisée de données à temps critique, dans lequel
- le système de communication comprend plusieurs réseaux (101-104) locaux pour la transmission de données au moyen d'un switching, au moins un réseau (200), supérieur hiérarchiquement par rapport aux réseaux locaux, pour la transmission de données au moyen d'un routing et un système (300) de passerelle pour le raccordement du système de communication à au moins un réseau (400) extérieur non sécurisé,
- le réseau supérieur hiérarchiquement est conformé et agencé, de manière à n'autoriser une communication de couche de réseau par le réseau supérieur hiérarchiquement, qu'entre des composants de système authentifiés,
- les réseaux (101-104) locaux comprennent chacun au moins un switch (201-205), qui est conformé et agencé pour authentifier des terminaux (111-114, 121-122, 131-133, 141-142) raccordés respectivement et pour affecter en conséquence une identité respective de terminaux à un réseau local physique ou logique,
- les réseaux locaux sont conformés et agencés chacun pour autoriser une communication à couche de sécurisation dans les réseaux locaux, de manière implicite, en raison d'une affectation des terminaux respectifs au même réseau local,
- les terminaux sont conformés et agencés chacun pour autoriser une communication sur couche 3-7 OSI entre des terminaux de réseaux locaux différents et/ou avec des terminaux du réseau extérieur non sécurisé, au moyen de zero trust-proxy (100, 130, 140), qui sont affectés chacun à un réseau local,
- les zero trust-proxies sont conformés et agencés chacun, de manière à ce que les terminaux, soient par session, authentifiés par le zero trust-proxy affecté à leur réseau local respectif, dans lequel il est prévu par réseau (103-104) local physique respectivement un zero trust-proxy (130, 140), qui s'y trouve et/ou par réseau (101-102) local logique respectivement une instance (100) zero trust-proxy dans le système de passerelle.
